# EUROPÄISCHE PATENTSCHRIFT

(11) **EP 2 243 625 B1**
(45) Veröffentlichungstag und Bekanntmachung des Hinweises auf die Patenterteilung: **13.01.2016**
(21) Anmeldenummer: 10002601.2
(22) Anmeldetag: 12.03.2010
(51) Int. Cl.: B30B 15/04

(54) **Umformmaschine, insbesondere Schmiedepresse**
Forming machine, in particular forging press
Machine de formage, notamment presse à forger

(30) Priorität: 23.04.2009 DE 102009018352; 20.01.2010 DE 102010005165
(43) Veröffentlichungstag der Anmeldung: 27.10.2010
(73) Patentinhaber: SMS Meer GmbH, 41069 Mönchengladbach (DE)
(72) Erfinder: Kirchner, Walter, 41363 Jüchen (DE)
(74) Vertreter: Grosse, Wolf-Dietrich Rüdiger

(56) Entgegenhaltungen:
- DE-A1- 2 020 120
- DE-A1- 10 241 119
- DE-C1- 19 500 983
- JP-A- H02 207 999

## Beschreibung

### 1. Gebiet der Erfindung

Die Erfindung betrifft eine Umformmaschine, insbesondere Schmiedepresse, zum Beispiel eine Exzenter-Schmiedepresse oder Spindelpresse.

### 2. Stand der Technik

Umformmaschinen der eingangs genannten Art besitzen üblicherweise ein Maschinengestell, bei Großpressen in der Regel ausgeführt in Grundsäulen- oder Kastensäulenbauart, das mit einem Oberholm und einem Fundamentholm bzw. oberen und unteren Pressenquerhaupt über durchgehende Zuganker miteinander verspannt ist. Ein derartiger Pressenrahmen ist beispielhaft in Bezug auf eine Exzenterpresse in der EP 0 644 805 B1 beschrieben. Hierbei verlaufen Dehnschrauben in Durchgangsbohrungen im oberen und unteren Pressenquerhaupt sowie durch Durchgangsbohrungen, welche sich über die gesamte Länge der Säulen erstrecken, durch das Maschinengestell hindurch. Dies setzt aufwendig herzustellende Tieflochbohrungen in den Pressensäulen und lange Zug- bzw. Pressenanker mit großem Schaft und Gewindedurchmesser voraus. Außerdem sind umfangreiche Montagehilfsmittel und erhöhte Kranhubhöhen aufgrund der besonderen Länge der Dehnschrauben und zur Montage der langen Anker erforderlich. Weiterhin macht auch der Transport der Anker besondere Vorkehrungen erforderlich, da diese generell eine Länge aufweisen müssen, die über die Höhe des gesamten Maschinengestells hinaus ausgebildet sein muss.

Ein Pressenrahmen mit den Merkmalen des Oberbegriffs des Anspruchs 1 ist in der DE 195 00 983 C1 breschrieben.

### 3. Aufgabe der Erfindung

Der Erfindung liegt die Aufgabe zugrunde, diese Nachteile zu vermeiden und gleichzeitig die Pressensteifigkeit zu erhöhen, so wie die Pressendehnung zu vermindern.

Diese Aufgabe wird im erfindungsgemäßen Sinne mit einer Umformmaschine, umfassend die Merkmale des Anspruchs 1, gelöst. Vorteilhafte Ausgestaltungsformen der Erfindung sind in den abhängigen Ansprüchen definiert.

### 4. Zusammenfassung der Erfindung

Gemäß der Erfindung wird eine Umformmaschine mit einem Maschinengestell oder Maschinenrahmen zur Verfügung gestellt, bei der die einzelnen Teile des Maschinengestells oder Maschinenrahmen mittels Dehnschrauben miteinander verbunden werden. Derartige Dehnschrauben dienen in einer dem Fachmann geläufigen Weise dazu, die oben genannten Bauteile des Maschinengestells zu einem geschlossenen Rahmen zu verbinden und dabei eine solche Vorspannung auf die Verbindung der einzelnen Bauteile aufzubringen, dass auch eine auf den Rahmen einwirkende Presskraft während des Schmiedeprozesses eine Aufweitung des Rahmens oder das Auftreten von Verspannungsspalten an den Verbindungsflächen der einzelnen Bauteile sicher unterbunden wird. Dies alles dient dazu, dass während des Schmiedeprozesses oder allgemein Pressvorgangs eine definierte Presskraft auf das Werkstück aufgebracht werden kann.

Im Falle einer Schmiede oder Presse ist mit dem unteren Querhaupt üblicherweise ein Gesenk oder ein Schmiedesattel oder generell eine untere Werkzeughälfte ortsfest verbunden, wo hingegen mit dem oberen Querhaupt sowohl ein auf- und abfahrbares Werkzeug als auch der Stellantrieb mit der Kraftaufbring-Vorrichtung verbunden ist. Beispielsweise während des Schmiedevorgangs wird ein Werkstück zwischen das untere und obere Querhaupt eingebracht und durch Niederfahren des oberen Werkzeugs gegen das untere Werkzeug zwischen den beiden Werkzeugen umgeformt. Dabei entstehen Umformkräfte, die über die Werkzeuge auch auf das Maschinengestell übertragen werden.

Im erfindungsgemäßen Sinne wird auf die Bereitstellung von durch die gesamte Höhe des Maschinengestells verlaufenden Schrauben dadurch verzichtet, dass jeder Verbindungsfläche zwischen oberem Querhaupt und einer oder mehreren Säulen einerseits und unterem Querhaupt und einer oder mehreren Säulen andererseits jeweils wenigstens zwei Dehnschrauben zugeordnet sind, welche sich durch Durchgangslöcher in den Querhaupten, nicht jedoch durch Durchgangslöcher in den Säulen erstrecken. Vielmehr sind im erfindungsgemäßen Sinne in den Säulen Sacklöcher vorgesehen, in die hinein sich die Dehnschrauben erstrecken und über einen Gewindeeingriff die Spannung zwischen Querhaupten und Säule bewirken.

Hierdurch können nicht nur wesentliche Einsparungen durch Vermeiden von Tieflochbohrungen in der Pressensäule erreicht werden, Kosteneinsparpotentiale ergeben sich auch durch die Möglichkeit, gegebenenfalls handelsübliche Pressenanker mit wesentlich geringerer Länge und Masse zu verwenden. Schließlich wird auch die Montierbarkeit der Presse insgesamt verbessert. Hierdurch werden schließlich sowohl die Herstellungs- als auch die Transportkosten wesentlich reduziert. Darüber hinaus kann die Pressensteifigkeit nahezu beliebig durch Verwendung einer beliebigen Anzahl von Dehnschrauben pro Verbindungsfläche erhöht werden und die Austauschbarkeit im Versagensfall wird erleichtert. Auch muss das Versagen einer Dehnschraube nicht zwangsläufig zum Ausfall der gesamten Umformmaschine führen, sondern ein Austausch einzelner Dehnschrauben kann gegebenenfalls auch während des fortlaufenden Betriebs, beispielsweise bei temporärer Aufbringung geringerer Lasten, erfolgen. Schließlich erlaubt die erfindungsgemäße Ausgestaltungsform der Säulen lediglich mit einer gewünschten Anzahl von Sacklöchern in den Verbindungsflächen auch die im wesentlichen gießtechnische Herstellung, wobei lediglich eine abschließende Bearbeitung gießtechnisch bereits vorgesehener Sacklöcher und das Einbringen des für die Verspannung mit der Dehnschraube notwendigen Gewindeteils ausgeführt werden muss.

Schließlich erlaubt die Verwendung einer Mehrzahl von vergleichsweise kurzen Dehnschrauben zur Erreichung der Verspannung des Maschinengestells auch eine deutliche Verminderung der Pressendehnung insgesamt, da die Pressendehnung nicht wesentlich von der Festigkeit einer einzelnen vergleichsweise langen und dementsprechend schlanken Dehnschraube abhängt.

In einer vorteilhaften Ausgestaltungsform der Erfindung ist die Umformmaschine eine Schmiedepresse, vorzugsweise eine Exzenter-Schmiedepresse oder Spindelpresse, vorzugsweise mit einer Betriebskraft von wenigstens 80 MN, insbesondere von wenigstens 100 MN. Im Falle derartiger mittelgroßer oder großer Schmiedepressen ist der durch die Erfindung erzielbare Effekt gegenüber den konventionellen Ausgestaltungsformen besonders groß. Im Falle von Exzenter-Schmiedepressen ist überdies der Einfluss dynamischer Kräfte auf das Maschinengestell besonders hoch, woraufhin an die Steifigkeit des Maschinengestells und schließlich die Festigkeit der Verbindungsflächen besonders hohe Anforderungen bestehen.

Die Anzahl der im erfindungsgemäßen Sinne verwendeten Dehnschrauben pro Verbindungsfläche ist nicht beschränkt, soweit wenigstens zwei Dehnschrauben pro Verbindungsfläche vorgesehen sind. Als vorteilhaft wird jedoch angesehen, wenn jeder Verbindungsfläche die gleiche Anzahl von Dehnschrauben zugeordnet ist, da hierdurch eine Symmetrie der Steifigkeit des Maschinengestells insgesamt erreicht werden kann. Im Ergebnis wird ein Maschinengestell erhalten, das sofern messbare Biegungen des Maschinengestells überhaupt auftreten, gleichmäßige Verbiegungen an allen Verbindungsstellen des Maschinengestells zeigt.

In einer weiteren bevorzugten Ausgestaltungsform der Erfindung erstrecken sich die Sacklöcher in den Säulen, vorzugsweise in den Stirnflächen der Säulen, über eine Länge von nicht mehr als zwanzig Prozent, vorzugsweise nicht mehr als zehn Prozent der jeweiligen Säulenlängen. Hierdurch wird die Herstellung der Säulen gegebenenfalls auch im Wesentlichen bereits beim Urformen durch Gießen bei ausreichender Dehnsteifigkeit des Maschinengestells insgesamt vorteilhaft unterstützt.

Es wird bevorzugt, wenn die Verbindung zwischen oberem Querhaupt und den Säulen über jeweils wenigstens 5, vorzugsweise wenigstens 10 Dehnschrauben erfolgt. Besonders bevorzugt wird überdies, wenn die Verbindung zwischen unterem Querhaupt und den Säulen über eine gleiche oder zumindest vergleichbare Anzahl von Dehnschrauben erfolgt. Hierdurch wird eine besonders sichere und biegesteife Verbindung zwischen den einzelnen Bauteilen des Maschinengestells mit einfachen Mitteln erreicht. Generell kann dabei auch davon ausgegangen werden, dass je höher die Anzahl der verwendeten Dehnschrauben ist, desto geringer die Länge der einzelnen Sacklöcher und/oder die Dicke der einzelnen Dehnschrauben ausgelegt sein kann, ohne nachteilige Effekte auf die Sicherheit der gesamten Umformmaschine zu bewirken.

Im erfindungsgemäßen Sinne ist die Anordnung der Sacklöcher und somit der Angriffspunkt für die von der Dehnschraube aufgebrachte Vorspann- und Haltekraft auf die Verbindungsflächen der einzelnen Bauteile nicht beschränkt. Bevorzugt wird jedoch, dass die Sacklöcher zumindest paarweise, vorzugsweise gruppenweise und insbesondere vollständig symmetrisch in den Stirnflächen der Säulen angeordnet sind. Die Anzahl und Anordnung der Paare und Gruppen über den Querschnitt der Stirnfläche der Säulen ist dabei ebenfalls nicht beschränkt. Bevorzugt wird jedoch, wenn im Fall einer im Wesentlichen zylindrischen Säule mit rundem Querschnitt die Sacklöcher wenigstens teilweise konzentrisch um den Mittelpunkt der Kreisfläche herum angeordnet sind. Besonders bevorzugt wird überdies eine Ausgestaltungsform, bei der die Sacklöcher auf wenigstens zwei konzentrischen Teilkreisen der Kreisfläche angeordnet sind. Hierdurch wird eine besonders sichere Verbindung der Säulen mit den oberen und unteren Querträgern erreicht, bei der die auf die Säulen einwirkende Vorspannkraft vorzugsweise im Wesentlichen gleichmäßig über die gesamte Stirnfläche auf die Säule einwirkt und örtliche Spannungsspitzen vermieden werden.

Die Anzahl der auf den konzentrischen Kreisen angeordneten Sacklöcher ist ebenfalls nicht begrenzt. Bevorzugt wird jedoch eine Ausgestaltungsform, bei der die Sacklöcher zumindest einer Gruppe, vorzugsweise jedoch sämtliche Sacklöcher, im Wesentlichen äquidistant zueinander angeordnet sind. Dies bedeutet, dass weniger Sacklöcher auf dem inneren Teilkreis angeordnet sind als auf dem äußeren Teilkreis. Eine derartige Ausgestaltung von weniger Sacklöchern auf einem inneren Teilkreis verglichen mit der Anzahl von Sacklöchern auf einem äußeren Teilkreis ist überdies auch bei nicht äquidistanter Anordnung der Sacklöcher zueinander bevorzugt.

Für eine derartige Anordnung werden die Pressensäulen / -kästen an ihren Stirnflächen mit auf einem oder mehreren Teilkreisen angeordneten Gewindesacklöchern versehen. Die zu verschraubenden oberen und unteren Pressenquerhäupter erhalten die gleiche Anzahl von Durchgangslöchern. In die Gewindesacklöcher werden Dehnschrauben eingesetzt, welche über mechanische, hydraulische oder thermische Spanneinrichtungen vorgespannt werden. Die gesamte Vorspannung liegt dabei vorzugsweise oberhalb der Betriebskraft der Presse (z.B. 80/100 MN) und verhindert ein Aufklappen der Kontaktflächen. Durch eine ausreichende Dehnlänge der Dehnschrauben, die im Bedarfsfall noch durch eine Dehnhülse verlängert werden kann, und gegebenenfalls eine steife Zwischenlage, können die Ausschlagsspannungen auf geringem Niveau gehalten werden.

In einer weiteren bevorzugten Ausgestaltungsform der erfindungsgemäßen Umformmaschine weisen die Sacklöcher in den Säulen den gleichen Durchmesser und die gleiche Tiefe auf, um somit das Symmetrieprinzip besonders vorteilhaft zu unterstützen. Bei Bedarf kann jedoch von diesem Prinzip dann abgewichen werden, wenn asymmetrische Kräfte in der Umformmaschine wirken oder eine einseitige erhöhte Steifigkeit der Umformmaschine insgesamt gewünscht ist.

Die Umformmaschine gemäß der Erfindung kann Dehnschrauben jeder Art verwenden. Bevorzugt wird jedoch, wenn die Dehnschrauben einen Schaftabschnitt sowie einen Gewindekopf aufweisen, welcher dann in ein in dem entsprechenden Sackloch vorgesehenes Gewinde eingreift. Besonders bevorzugt wird, wenn der gewindelose Schaftabschnitt in seiner Länge so bemessen ist, dass er sich durch die gesamte Durchgangsbohrung im oberen und/oder unteren Querhaupt hindurch erstreckt.

Weitere Merkmale und Einzelheiten der Erfindung lassen sich den Zeichnungen entnehmen. Die hier dargestellten bevorzugten Ausführungsformen der Erfindung sind jedoch nicht dazu geeignet, den Schutzbereich der Erfindung, wie er in den anhängenden Ansprüchen definiert ist, in irgendeiner Weise einzuschränken. Es zeigen:

Fig.1 als Einzelheit einer Umformmaschine bzw. Presse in einem Längsschnitt einem mit einem Oberholm / oberem Pressenhaupt über kurze Dehnschrauben verspannte Säule, die Ankerbohrungen von nur sehr geringer Tiefe aufweist bzw. erfordert;

Fig. 2 den Gegentand der Fig. 1 in der Draufsicht, wobei im Ausführungsbeispiel 10 auf einem Teilkreis verteilt angeordnete Dehnschrauben vorgesehen sind;

Fig. 3 als Einzelheit die Säulenverspannung des Fundamentholms bzw. unterem Pressenquerhaupts, wobei im Ausführungsbeispiel auf einem äußeren Teilkreis verteilte zehn Dehnschrauben und einem inneren Teilkreis verteilte fünf Dehnschrauben vorgesehen sind.

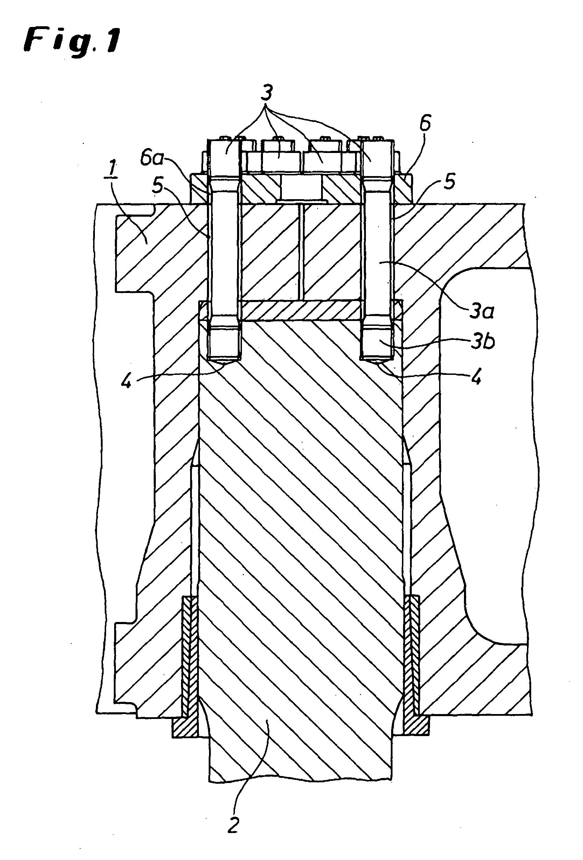

Fig. 1 zeigt eine Abschnittszeichnung einer erfindungsgemäßen Umformmaschine mit einem Teil des Maschinengestells, umfasst ein oberes Querhaupt 1 sowie eine Säule 2. In der Schnittdarstellung sind vier Dehnschrauben 3 dargestellt, von denen die beiden mittleren Schrauben 3 aus der Schnitt- und Papierebene heraus nach vorn vorgelagert sind und dementsprechend nur die linken und rechten Dehnschrauben 3 vollständig geschnitten dargestellt sind. Die Dehnschrauben 3 sind sämtlich mit gleichem Durchmesser, gleicher Länge und aus gleichem Material verwirklicht und verlaufen durch Durchgangsbohrungen 6a in einer Zwischenplatte 6 und Durchgangslöcher 5, die in das obere Querhaupt 1 eingebracht sind. Die Dehnschrauben 3 weisen einen Schaftabschnitt 3a mit im Wesentlichen zylindrischem Aufbau und ohne Gewindeabschnitt sowie einen Gewindekopf 3b auf, dessen (nicht dargestelltes) Gewinde mit einem (nicht dargestellten) Gewinde innerhalb der Sacklöcher 4, die in der Stirnfläche der Säule 2 eingebracht sind, zusammen wirkt. Über an den Dehnschrauben-Köpfen angeordnete Eingriffsmittel kann beispielsweise eine mechanische Vorspannung der Dehnschrauben 3 erfolgen.

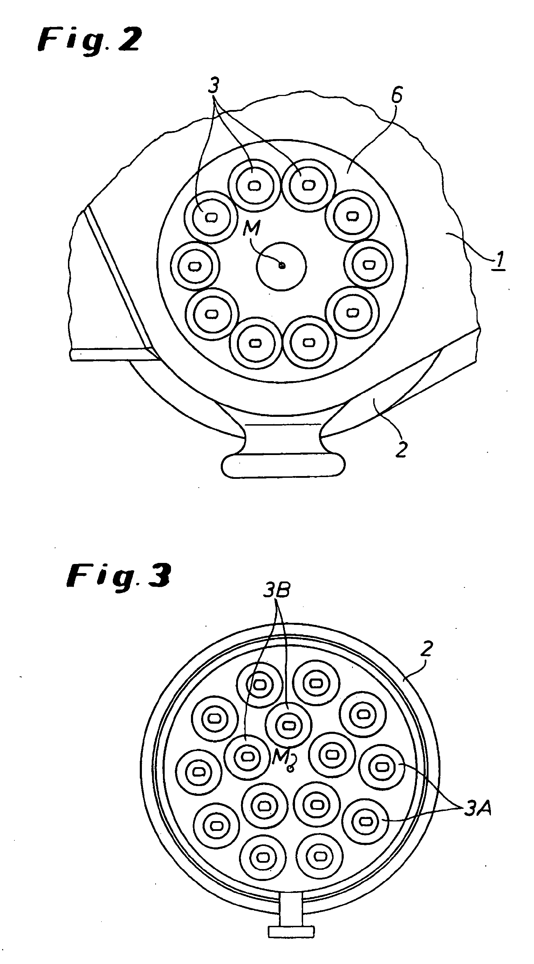

Fig. 2 zeigt eine beispielhafte und besonders bevorzugte Ausgestaltungsform der Verbindung von oberem Querträger 1, Säule 2 über zehn konzentrisch um den

Mittelpunkt sowohl der Zwischenscheibe 6 als auch der Säule 2 auf einem Teilkreis angeordnete Dehnschrauben 3. Die Dehnschrauben sind wiederum sowohl in Länge als auch Durchmesser gleich bemessen und äquidistant zueinander auf dem Teilkreis angeordnet. Fig. 3 zeigt beispielhaft die Verbindung eines (nicht dargestellten) unteren Querträgers mit einer Säule 2 über fünfzehn gleich bemessene Dehnschrauben 3. Die jeweiligen Dehnschrauben 3 sind dabei so über die Kreisfläche der Säule 2 verteilt, dass zehn Dehnschrauben 3a konzentrisch auf einem äußeren Teilkreis um den Mittelpunkt M der Kreisfläche 2 herum angeordnet sind, wo hingegen fünf Dehnschrauben 3A auf einem inneren Teilkreis konzentrisch sowohl zum Mittelpunkt M als auch zum äußeren Teilkreis auf der kreisrunden Querschnittsfläche der Säule 2 angeordnet sind. Sowohl auf dem äußeren Teilkreis sind die einzelnen Dehnschrauben 3A äquidistant zueinander angebracht, als auch die Dehnschrauben 3B auf dem inneren Teilkreis. Die hier gewählte bevorzugte Ausführungsform erlaubt zudem auch eine Zuordnung von jeweils drei Dehnschrauben gruppenweise zueinander, wobei die einzelnen Dehnschrauben 3A, 3B dieser Dreiergruppen ebenfalls im Wesentlichen äquidistant zueinander angeordnet sind.

## Patentansprüche

1. Umformmaschine mit einem Maschinengestell, umfassend ein unteres Querhaupt, ein oberes Querhaupt (1) sowie zwischen dem oberen und dem unteren Querhaupt angeordnete und mit diesen verspannte Säulen (2), wobei die Verspannung zwischen den Säulen sowie dem oberen und dem unteren Querhaupt über Dehnschrauben (3) erfolgt,
**dadurch gekennzeichnet, dass**
jeder Verbindungsfläche zwischen dem oberen und dem unteren Querhaupt und den einzelnen Säulen (2) jeweils wenigstens zwei Dehnschrauben (3) zugeordnet sind und die Dehnschrauben sich durch Durchgangslöcher (6 a) in dem oberen bzw. dem unteren Querhaupt hindurch und in in den Säulen (2) vorgesehene Sacklöcher (4) hinein erstrecken.

2. Umformmaschine gemäß Anspruch 1, **dadurch gekennzeichnet, dass** die Umformmaschine eine Schmiedepresse, vorzugsweise eine Exzenter-Schmiedepresse oder Spindelpresse, vorzugsweise mit einer Betriebskraft von wenigstens 80 MN, insbesondere von wenigstens 100 MN. ist.

3. Umformmaschine gemäß einem der voranstehenden Ansprüche, **dadurch gekennzeichnet, dass** jeder Verbindungsfläche die gleiche Anzahl von Dehnschrauben zugeordnet ist.

4. Umformmaschine gemäß einem der voranstehenden Ansprüche, **dadurch gekennzeichnet, dass** sich die Sacklöcher jeweils über eine Länge von nicht mehr als 20%, vorzugsweise nicht mehr als 10% der Säulenlänge in die Säulen hinein erstrecken.

5. Umformmaschine gemäß einem der voranstehenden Ansprüche, **dadurch gekennzeichnet, dass** die Verbindung zumindest zwischen oberem Querhaupt und den Säulen über jeweils wenigstens 5, vorzugsweise wenigstens 10, Dehnschrauben erfolgt.

6. Umformmaschine gemäß einem der voranstehenden Ansprüche, **dadurch gekennzeichnet, dass** die Sacklöcher zumindest paarweise, vorzugsweise gruppenweise und insbesondere vollständig, symmetrisch in den Stirnflächen der Säulen angeordnet sind.

7. Umformmaschine gemäß Anspruch 6, **dadurch gekennzeichnet, dass** die Querschnittsfläche der Säulen im Wesentlichen rund ist und die Sacklöcher zumindest paarweise, vorzugsweise gruppenweise und insbesondere vollständig, konzentrisch um den Mittelpunkt der Kreisfläche herum angeordnet sind.

8. Umformmaschine gemäß Anspruch 7, **dadurch gekennzeichnet, dass** die Sacklöcher auf wenigstens zwei konzentrischen Teilkreisen angeordnet sind.

9. Umformmaschine gemäß Anspruch 6 bis 8, **dadurch gekennzeichnet, dass** die Sacklöcher zumindest einer Gruppe im Wesentlichen äquidistant zueinander angeordnet sind.

10. Umformmaschine gemäß einem der voranstehenden Ansprüche, **dadurch gekennzeichnet, dass** die Sacklöcher den gleichen Durchmesser und die gleiche Tiefe aufweisen.

11. Umformmaschine gemäß einem der voranstehenden Ansprüche, **dadurch gekennzeichnet, dass** die Dehnschrauben einen Schaftabschnitt sowie einen Gewindekopf aufweisen, der in ein in dem entsprechenden Sackloch vorgesehenes Gewinde eingreift.

## Claims

1. A forming machine with a machine frame comprising a lower cross member, an upper cross member (1), as well as columns (2) that are arranged between and tensioned to the upper and the lower cross member, wherein the tensioning between the columns and the upper and the lower cross member is realized by means of tension screws (3),
**characterized in that**
at least two tension screws (3) are respectively assigned to each connecting surface between the upper and the lower cross member and the individual columns (2), and **in that** the tension screws extend through respective clearance holes (6 a) in the upper and the lower cross member and into the blind holes (4) provided in the columns (2).

2. The forming machine according to claim 1, **characterized in that** the forming machine is a forging press, preferably an eccentric forging press or a screw press, preferably with an operating force of at least 80 MN, particularly at least 100 MN.

3. The forming machine according to one of the preceding claims, **characterized in that** the same number of tension screws is assigned to each connecting surface.

4. The forming machine according to one of the preceding claims, **characterized in that** the blind holes respectively extend into the columns by a length of no more than 20%, preferably no more than 10%, of the column length.

5. The forming machine according to one of the preceding claims, **characterized in that** at least the connection between the upper cross member and the columns is respectively produced with at least 5 tension screws, preferably at least 10 tension screws.

6. The forming machine according to one of the preceding claims, **characterized in that** the blind holes are arranged symmetrically in the end faces of the columns at least in pairs, preferably in groups, in particular entirely.

7. The forming machine according to claim 6, **characterized in that** the cross-sectional area of the columns is essentially round and the blind holes are arranged concentrically around the center of the circular area at least in pairs, preferably in groups, in particular entirely.

8. The forming machine according to claim 7, **characterized in that** the blind holes are arranged on at least two concentric reference circles.

9. The forming machine according to claims 6-8, **characterized in that** the blind holes of at least one group are essentially arranged equidistant to one another.

10. The forming machine according to one of the preceding claims, **characterized in that** the blind holes have the same diameter and the same depth.

11. The forming machine according to one of the preceding claims, **characterized in that** the tension screws feature a screw shaft, as well as a threaded head that engages into a thread provided in the corresponding blind hole.

## Revendications

1. Machine de formage dotée d'un bâti de machine, comportant un chapeau transversal, un chapeau transversal supérieur (1) ainsi que des colonnes (2) disposées entre les chapeaux transversaux supérieur et inférieur et serrées avec ceux-ci, le serrage étant réalisé entre les colonnes et les chapeaux transversaux supérieur et inférieur par des vis de traction (3),
**caractérisée en ce que**
deux vis de traction (3) sont respectivement associées à chaque surface de connexion entre les chapeaux supérieur et inférieur et que les vis de traction s'étendent à travers des trous de passage (6a) dans le chapeau transversal supérieur ou inférieur et dans des trous borgnes (4) pratiqués dans les colonnes (2).

2. Machine de formage selon la revendication 1, **caractérisée en ce que** la machine de formage est une presse de forge, de préférence une presse de forge excentrique ou une presse à broche ayant de préférence une puissance de fonctionnement d'au moins 80 MN, en particulier d'au moins 100 MN.

3. Machine de formage selon une des revendications précédentes, **caractérisée en ce que** le même nombre de vis de traction est associé à chaque surface de connexion.

4. Machine de formage selon une des revendications précédentes, **caractérisée en ce que** les trous borgnes s'étendent respectivement dans les colonnes sur une longueur ne dépassant pas 20 %, de préférence 10 % ? De la longueur des colonnes.

5. Machine de formage selon une des revendications précédentes, **caractérisée en ce que** la connexion au moins entre le chapeau transversal supérieur et les colonnes est assurée respectivement par au moins 5, de préférence au moins 10 vis de traction.

6. Machine de formage selon une des revendications précédentes, **caractérisée en ce que** les trous borgnes sont disposés du moins par paires, de préférence par groupes et en particulier entièrement symétriquement dans les surfaces frontales des colonnes.

7. Machine de formage selon la revendication 6, **caractérisée en ce que** la surface de section transversale des colonnes est sensiblement ronde et que les trous borgnes sont disposés du moins par paires, de préférence par groupes et en particulier entièrement concentriquement autour du point central de la surface circulaire.

8. Machine de formage selon la revendication 7, **caractérisée en ce que** les trous borgnes sont disposés sur au moins deux arcs de cercle concentrique.

9. Machine de formage selon les revendications 6 à 8, **caractérisée en ce que** les trous borgnes d'au moins un groupe sont disposés sensiblement équidistants les uns par rapport aux autres.

10. Machine de formage selon une des revendications précédentes, **caractérisée en ce que** les trous borgnes ont le même diamètre et la même profondeur.

11. Machine de formage selon une des revendications précédentes, **caractérisée en ce que** les vis de traction présentent une section de tige et une tête filetée qui s'engrène dans un filet prévu dans le trou borgne correspondant.
